# EUROPEAN PATENT APPLICATION

(11) **EP 4 778 671 A1**
(43) Date of publication of application: **22.07.2026**
(21) Application number: 26152477.1
(22) Date of filing: 16.01.2026
(51) Int. Cl.: B23P 15/00, F02D 9/10, F16K 1/22

(54) **METHOD AND JIG FOR MANUFACTURING BUTTERFLY VALVE**

(30) Priority: 17.01.2025 JP 2025006607
(71) Applicant: Nikki Co., Ltd., Atsugi, Kanagawa 243-0801 (JP)
(72) Inventor: AIZAWA, Shutaro, Atsugi-shi, 243-0801 (JP); SUEMATSU, Yukinori, Atsugi-shi, 243-0801 (JP)
(74) Representative: Boult Wade Tennant LLP

(57) **Abstract**

When a valve disc (5) is fixed to a valve shaft (4) disposed across a fluid passage (2) formed in a valve housing (1) and rotatably supported, a pin (10) having a head portion (11) and a shaft portion (12) is used to insert the pin (10) into a valve-shaft-side through-hole (7) and a valve-disc-side through-hole (8) from a side of the shaft portion (12) thereof, and then a tip portion of the shaft portion (12) of the pin (10) is welded to a periphery. When the pin (10) is welded, a concave-side pressing body (20) and/or a convex-side pressing body (30) of a jig (100) are moved in a direction approaching each other, the valve shaft (4) is relatively pressed from a side of the head portion (11) of the pin (10) toward a side of the tip portion of the shaft portion (12) of the pin (10) to deform the valve shaft (4), and pressing of the valve shaft (4) is released after completion of the welding.

## Description

### Technical Field

The present invention relates to a method for manufacturing a butterfly valve and a jig used in the method.

### Background Art

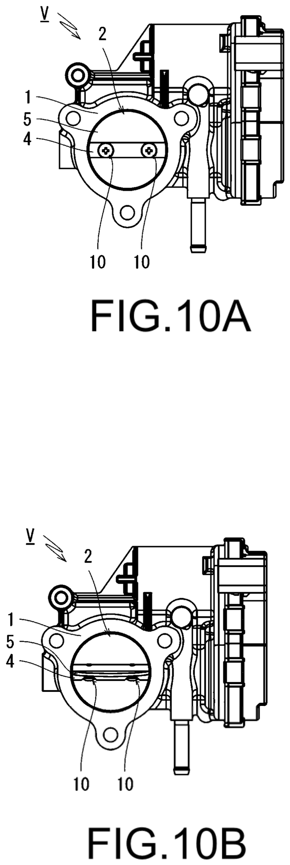

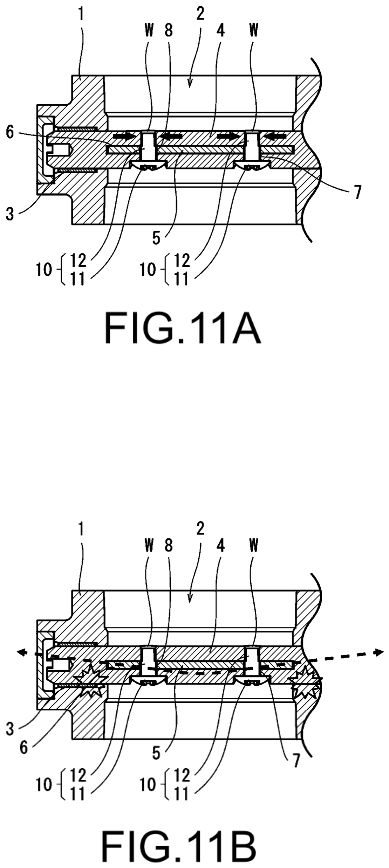

In general, as illustrated in FIGS. 10 and 11, for example, a butterfly valve V that is used in a throttle device of an internal combustion engine (engine) is known. The butterfly valve V is driven by an electric actuator such as a motor by electronic control that controls fluid by rotating a valve shaft to which a plate-shaped valve disc is fixed to open and close a fluid passage. The butterfly valve V includes a valve shaft 4 disposed across a fluid passage 2 formed in a valve housing 1 and rotatably supported by a bearing portion 3, and a plate-shaped valve disc 5 fixed to the valve shaft 4 in the fluid passage 2, in which the valve shaft 4 is rotated by the electric actuator to control an opening degree of the fluid passage 2. The valve disc 5 is inserted through a slit 6 formed in the valve shaft 4, and is fixed by a pin 10 at positions symmetrical with respect to an axial central portion of the valve shaft 4 (See, for example, JP 2020-112088 A). The pin 10 comprises a screw having a head portion 11 and a shaft portion 12 protruding from the head portion 11 and formed with a male thread. The valve shaft 4 is formed with a valve-shaft-side through-hole 7 which has an axis in a direction orthogonal to the axial direction thereof and into which the shaft portion 12 of the pin 10 is screwed and inserted, and the valve disc 5 is formed with a valve-disc-side through-hole 8 which corresponds to the valve-shaft-side through-hole 7 and into which the shaft portion 12 of the pin 10 is screwed and inserted.

Incidentally, in this conventional butterfly valve V, the valve disc 5 is fixed by the pin 10 comprising a screw, but there is a risk that the screw may loosen and fall out. Thus, it is conceivable to apply an adhesive to the pin 10 to prevent this falling-out. However, in the case of using an adhesive, when the fluid is a high-temperature exhaust gas, it is necessary to select a durable adhesive, which is expensive and undesirable. Therefore, for example, it is also conceivable to use a method of staking the tip portion of the shaft portion 12 of the pin 10 protruding from the valve shaft 4 using the technique described in JP 2018-115699 A. However, when the pin 10 is staked, the staked portion protrudes into the fluid passage 2 more than the valve shaft 4, and thus there is a disadvantage that the area of the fluid passage is reduced accordingly.

In order to solve these disadvantages, for example, a manufacturing method is conceivable in which the tip portion of the shaft portion 12 of the pin 10 is welded to the valve shaft 4 using the technique described in JP S53-19831 A. In this manufacturing method, as illustrated in FIG. 11, the valve shaft 4 is pivotally supported by the bearing portion 3 of the valve housing 1, and the valve disc 5 is inserted into and attached to the slit 6 of the valve shaft 4. Next, the pin 10 is screwed and inserted into the valve-shaft-side through-hole 7 and the valve-disc-side through-hole 8 from the shaft portion 12 side. Thereafter, the tip portion of the shaft portion 12 of the pin 10 is welded at its periphery.

### Citation List

### Patent Literature

Patent Literature 1: JP 2020-112088 A
Patent Literature 2: JP 2018-115699 A
Patent Literature 3: JP S53-019831 U1

### Summary of Invention

### Technical Problem

However, when the pin 10 is welded to prevent the pin 10 from falling out, residual stress and deformation occur due to welding. That is, when the heated welded portion W cools, the side of the welded portion W of the valve shaft 4 contracts in the direction indicated by the black arrow in FIG. 11A, and the valve shaft 4 is deformed. Therefore, the valve shaft 4 curves along the direction indicated by the broken line arrow in FIG. 11B such that the tip portion side of the shaft portion 12 of the pin 10 becomes concave and the head portion 11 side of the pin 10 becomes convex. Consequently, there is a problem that the straightness of the valve shaft 4 deteriorates, the rotation of the valve shaft 4 with respect to the bearing portion 3 becomes stiff, and the operation may be hindered.

The present invention has been made in view of the above problems, and an object of the present invention is to provide a method for manufacturing a butterfly valve capable of suppressing deformation of a valve shaft even when a pin is welded, and maintaining straightness of the valve shaft to enable smooth rotation of the valve shaft, and a jig used for the method.

### Solution to Problem

In order to achieve such an object, the method for manufacturing a butterfly valve of the present invention is a method for manufacturing a butterfly valve including a valve housing having a fluid passage therein, a valve shaft rotatably provided in the valve housing across the fluid passage, and a valve disc fixed to the valve shaft in the fluid passage. A pin having a head portion and a shaft portion is used, a valve-shaft-side through-hole having an axis in a direction orthogonal to an axial direction of the valve shaft and through which the shaft portion of the pin is inserted is formed in the valve shaft, and a valve-disc-side through-hole corresponding to the valve-shaft-side through-hole and through which the shaft portion of the pin is inserted is formed in the valve disc. The valve disc is attached to the valve shaft by allowing the valve-shaft-side through-hole and the valve-disc-side through-hole to communicate with each other. Next, the pin is inserted into the valve-shaft-side through-hole and the valve-disc-side through-hole from the shaft portion side thereof. Thereafter, when the tip portion of the shaft portion of the pin is welded, the valve shaft is relatively pressed from the head portion side of the pin to the tip portion side of the shaft portion of the pin to deform the valve shaft, and the pressing of the valve shaft is released after the welding is completed.

Here, examples of the materials of the valve shaft, the valve disc, and the pin include metals such as iron, brass, aluminum, and aluminum alloys, and resins. The pin may have any form as long as the pin has a head portion and a shaft portion having a diameter smaller than that of the head portion, such as a screw or a rivet. In addition, the welding method can be appropriately selected according to the material conditions of the valve shaft and the pin, for example, arc welding (non-consumable electrode type or consumable electrode type), electron beam welding, laser welding, and the like.

Further, in the present invention, the valve shaft is deformed at the time of welding the pin, but the deformation may be plastic deformation or elastic deformation, and can be appropriately selected according to material conditions and dimensional conditions of the valve shaft, the valve disc, and the pin, as well as the degree of deformation of the valve shaft when welding is performed without pressing. In addition, the deformation amount of the valve shaft at the time of pressing (pressing force applied to the valve shaft) can also be appropriately determined in accordance with these conditions. That is, the pressing is released after the welding is completed so that the valve shaft becomes straight upon returning to room temperature.

The timing of releasing the pressure after completion of the welding is appropriately determined depending on the type of welding. For example, in the case of welding in which heat spreads throughout and cooling takes time, it is desirable to release the pressure after the component has cooled. In addition, for example, in a case where micro-arc welding is performed, since heat does not easily spread throughout and cooling occurs quickly, it is desirable to release the pressure immediately after welding.

Accordingly, when the tip portion of the shaft portion of the pin is welded, the valve shaft is relatively pressed from the head portion side of the pin to the tip portion side of the shaft portion of the pin to deform the valve shaft. That is, welding is performed in a state where the valve shaft is deformed in an opposite direction to the deformation of the valve shaft caused by welding of the pin. After the welding is completed, the pressure is released in a timely manner. In this case, the welded portion melts at the time of welding the pin, and thereafter, the material hardens and contracts as the welded portion cools, so that the side of the welded portion of the valve shaft contracts, and the valve shaft curves such that the tip portion side of the shaft portion of the pin becomes concave and the head portion side of the pin becomes convex. However, since the valve shaft is deformed by relatively pressing the valve shaft from the head portion side of the pin to the tip portion side of the shaft portion of the pin at the time of welding, that is, since the valve shaft is curved and deformed such that the tip portion side of the shaft portion of the pin becomes convex and the head portion side of the pin becomes concave, the deformations cancel out, and the valve shaft can maintain straightness even after welding. As a result, when using the product, it is possible to prevent the rotation of the valve shaft from becoming stiff, enable smooth rotation of the valve shaft, and to improve the quality of the product.

In this configuration, the deformation of the valve shaft is performed by applying pressure to the valve shaft from both the tip portion side of the shaft portion of the pin and the head portion side of the pin. The concave-side pressing positions of the valve shaft on the tip portion side of the shaft portion of the pin are two positions on both axial end portion sides of the valve shaft and facing the inside of the fluid passage. The convex-side pressing position of the valve shaft on the head portion side of the pin is an axially intermediate portion of the valve shaft and between the concave-side pressing positions. With this arrangement, if the valve shaft were simply pressed from the head portion side of the pin to the tip portion side of the shaft portion of the pin, a load would be applied to the bearing portion and the valve housing. However, since the side end portion of the valve shaft is pressed, a load is not applied to the bearing portion and the valve housing. Therefore, adverse effects on the bearing portion can be prevented.

More specifically, when the tip portion of the shaft portion of the pin is welded, a jig for pressing the valve shaft is used. The jig includes a concave-side pressing body and a convex-side pressing body. The concave-side pressing body is inserted into the fluid passage of the valve housing, and abuts on two concave-side pressing positions facing the inside of the fluid passage on both axial end portion sides of the valve shaft to relatively press the valve shaft from the tip portion side of the shaft portion of the pin to the head portion side of the pin. The convex-side pressing body is inserted into the fluid passage of the valve housing, and abuts on the convex-side pressing position between the concave-side pressing positions, which is an axially intermediate portion of the valve shaft, to relatively press the valve shaft from the head portion side of the pin to the tip portion side of the shaft portion of the pin.

Accordingly, when the tip portion of the shaft portion of the pin is welded, the convex-side pressing body and/or the concave-side pressing body are moved in a direction to approach each other to press the valve shaft. There are the following three modes of pressing: (1) The convex-side pressing body is fixed, and the concave-side pressing body is moved toward the convex-side pressing body; (2) The concave-side pressing body is fixed, and the convex-side pressing body is moved toward the concave-side pressing body; and (3) Both the convex-side pressing body and the concave-side pressing body are moved in directions to approach each other.

At the time of this pressing, while both end portions in the axial direction of the valve shaft are pressed by the concave-side pressing body, the axial central portion of the valve shaft is relatively pressed by the convex-side pressing body from the side where the head portion of the pin is located, whereby the valve shaft is deformed in a required direction. Therefore, the jig ensures that the above-described functions and effects are reliably exhibited.

Further, in the present invention, the convex-side pressing body is formed in a columnar shape insertable into the fluid passage of the valve housing, and includes a convex-side abutting portion formed at the center of one end thereof and abutting on the convex-side pressing position of the valve shaft. The concave-side pressing body is formed in a columnar shape insertable into the fluid passage of the valve housing, and includes concave-side abutting portions formed at both side edge portions of one end of the concave-side pressing body and abutting on the concave-side pressing position of the valve shaft, a recess that is formed between the concave-side abutting portions to allow deformation of the valve shaft toward the tip portion side of the shaft portion of the pin, and a working hole formed therethrough so that a welding tool can pass therethrough.

Accordingly, when the axial central portion of the valve shaft is relatively pressed from the side where the head portion of the pin is located by the convex-side abutting portion of the convex-side pressing body, the valve shaft bends such that the side where the head portion of the pin is located becomes convex, and is curvedly deformed. However, since the concave-side pressing body is formed with the recess, the curved portion enters the recess, and the valve shaft does not interfere with the concave-side pressing body, so that the curved deformation can be reliably performed. In addition, at the time of welding, welding can be performed by inserting a welding tool toward the tip portion of the shaft portion of the pin through the working hole of the concave-side pressing body, so that the welding operation of the tip portion can be reliably performed while applying a load to the valve shaft.

Further, in the present invention, the convex-side abutting portion of the convex-side pressing body is formed in an arc shape following the outer peripheral shape of the valve shaft or a V-shape making two-point contact with the outer periphery of the valve shaft. The concave-side abutting portions of the concave-side pressing body are formed in an arc shape following the outer peripheral shape of the valve shaft or a V-shape making two-point contact with the outer periphery of the valve shaft.

Accordingly, since the convex-side abutting portion of the convex-side pressing body and the concave-side abutting portions of the concave-side pressing body have shapes matching the outer periphery of the valve shaft, the pressing force can be reliably transmitted to the valve shaft, thereby enabling reliable deformation of the valve shaft.

Further, in order to achieve the above object, the present invention provides a configuration of a jig used in the above-described manufacturing method. The jig includes a convex-side pressing body that relatively presses the valve shaft from the head portion side of the pin toward the tip portion side of the shaft portion of the pin, and a concave-side pressing body that relatively presses the valve shaft from the tip portion side of the shaft portion of the pin toward the head portion side of the pin.

### Advantageous Effects of Invention

As described above, according to the present invention, even when the pin for fixing the valve disc is welded to the valve shaft, deformation of the valve shaft can be reduced, and the straightness of the valve shaft can be maintained, thereby enabling smooth rotation of the valve shaft.

### Brief Description of Drawings

FIG. 1 is a view illustrating an example of a process in a method for manufacturing a butterfly valve according to an embodiment of the present invention, and is a diagram illustrating a valve shaft and a valve disc assembly process;
FIG. 2 is a view illustrating an example of a process in the method for manufacturing a butterfly valve according to the embodiment of the present invention, and is a cross-sectional view illustrating a state in which a jig is mounted;
FIG. 3 is a view illustrating an example of the process in the method for manufacturing a butterfly valve according to the embodiment of the present invention, and is a cross-sectional view illustrating a welding process;
FIG. 4 is a view illustrating an example of the process in the method for manufacturing a butterfly valve according to the embodiment of the present invention, and is a cross-sectional view illustrating a pressing release process;
FIG. 5 is a cross-sectional view taken along line A-A illustrated in FIG. 2;
FIG. 6 is a cross-sectional view illustrating a second example of the jig according to the embodiment of the present invention in a state at the time of being attached;
FIG. 7 is a cross-sectional view illustrating a third example of the jig according to the embodiment of the present invention in a state at the time of being attached;
FIGS. 8A and 8B are diagrams illustrating a fourth example of the jig according to the embodiment of the present invention in a state at the time of being attached, in which FIG. 8A is a front cross-sectional view and FIG. 8B is a cross-sectional view taken along line B-B illustrated in FIG. 8A;
FIG. 9 is a cross-sectional view illustrating an example of another butterfly valve to which the present invention is applied;
FIGS. 10A and 10B illustrate an example of a butterfly valve to which the present invention is applied, in which FIG. 10A is a diagram illustrating a valve-closed state and FIG. 10B is a diagram illustrating a valve-open state; and
FIGS. 11A and 11B are cross-sectional views of a main part illustrating a problem of a butterfly valve manufactured by a method for manufacturing a butterfly valve in a related art, in which FIG. 11A is a diagram illustrating a state during welding, and FIG. 11B is a diagram illustrating a state during use.

### Description of Embodiments

Embodiments of a method for manufacturing a butterfly valve and a jig used in the method according to the present invention will be described in detail with reference to the accompanying drawings. The same reference numerals designate the same or similar components as those already described.

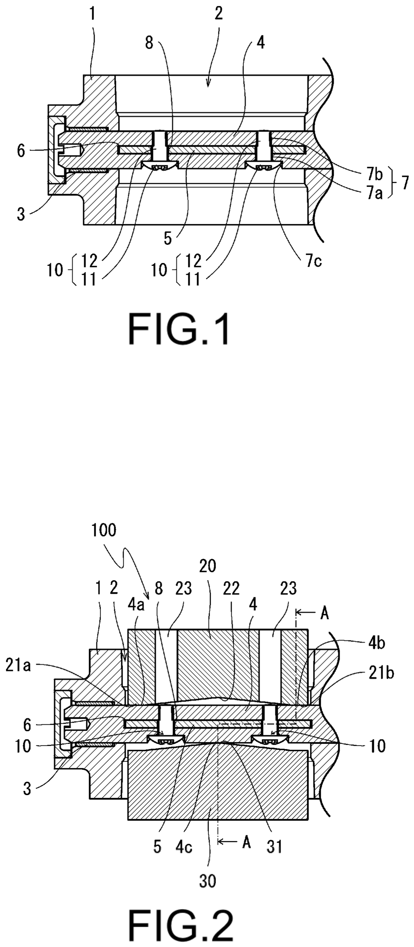

FIGS. 1 to 4 illustrate a method for manufacturing a butterfly valve according to an embodiment of the present invention. As illustrated in FIGS. 10A and 10B, a butterfly valve V manufactured by the present manufacturing method is used in a throttle device of an internal combustion engine (engine), in which an electric actuator such as a motor is driven by electronic control. The butterfly valve V includes a valve housing 1 in which a fluid passage 2 is formed, a valve shaft 4 rotatably supported by a bearing portion 3 in the valve housing 1 across the fluid passage 2, and a plate-shaped valve disc 5 fixed to the valve shaft 4 in the fluid passage 2. The valve shaft 4 is rotated by the electric actuator to control an opening degree of the fluid passage 2. The valve shaft 4 is pivotally supported at least at two locations by the bearing portion 3 illustrated on the left side of FIG. 1 and a bearing portion (not illustrated) located on the right side of FIG. 1.

Specifically, the valve shaft 4 is formed with a slit 6 through which the valve disc 5 is inserted. The valve disc 5 is inserted into the slit 6 of the valve shaft 4, and is fixed by pins 10 at symmetrical positions with respect to the axial central portion of the valve shaft 4 facing the inside of the fluid passage 2. The pin 10 comprises a screw having a head portion 11 and a shaft portion 12 protruding from the head portion 11 and formed with a male thread. The valve shaft 4 is formed with a valve-shaft-side through-hole 7 which has an axis in a direction orthogonal to the axial direction thereof and into which the shaft portion 12 of the pin 10 is screwed and inserted, and the valve disc 5 is formed with a valve-disc-side through-hole 8 which corresponds to the valve-shaft-side through-hole 7 and into which the shaft portion 12 of the pin 10 is screwed and inserted. Two or more sets (two sets in the embodiment) including the valve-shaft-side through-hole 7 and the valve-disc-side through-hole 8 are provided, and each set is provided at a bilaterally symmetrical position with respect to the axial central portion of the valve shaft 4 facing the fluid passage 2. The number of pins 10 (two in the embodiment) corresponds to the number of sets of the valve-shaft-side through-hole 7 and the valve-disc-side through-hole 8, and the insertion directions of the pins 10 are set to the same direction.

In addition, the valve-shaft-side through-hole 7 is formed by coaxially arranging a first hole 7a on the side of the head portion 11 of the pin 10 and a second hole 7b on the side of the tip portion of the shaft portion 12 of the pin 10. The first hole 7a is provided with a recess portion 7c into which the head portion 11 of the pin 10 is inserted. The valve disc 5 is attached by being inserted into the slit 6 of the valve shaft 4 such that the valve-shaft-side through-hole 7 and the valve-disc-side through-hole 8 communicate with each other, and the pin 10 is screwed and inserted into the valve-shaft-side through-hole 7 and the valve-disc-side through-hole 8. The length of the shaft portion 12 of the pin 10 is set such that the tip portion thereof does not protrude from the second hole 7b when the pin 10 is inserted. Also, the tip portion of the shaft portion 12 of the pin 10 is welded to the periphery thereof. The welded portion W of the pin 10 on the side of the second hole 7b is formed to be substantially flush with the outer surface of the valve shaft 4.

Here, examples of materials for the valve shaft 4, the valve disc 5, and the pin 10 include metals such as iron, brass, aluminum, and aluminum alloys, as well as resins. In the present embodiment, the valve shaft 4, the valve disc 5, and the pin 10 are all made of stainless steel, but the materials are not limited thereto.

Next, a method for manufacturing a butterfly valve according to an embodiment of the present invention will be described in detail.

### <Valve Shaft and Valve Disc Assembly Process>

As illustrated in FIG. 1, the valve shaft 4 is mounted to the valve housing 1. In this mounting, the valve shaft 4 is rotatably supported by the bearing portion 3. Next, the valve disc 5 is attached to the valve shaft 4. In this case, the valve disc 5 is inserted into the slit 6 of the valve shaft 4, and the valve-shaft-side through-hole 7 and the valve-disc-side through-hole 8 communicate with each other. Then, the pin 10 is screwed and inserted into the first hole 7a of the valve-shaft-side through-hole 7, the valve-disc-side through-hole 8, and the second hole 7b of the valve-shaft-side through-hole 7 to fix the valve disc 5 to the valve shaft 4.

### <Welding Process>

After the valve disc 5 is fixed to the valve shaft 4 by the pins 10, the tip portion of the shaft portion 12 of each pin 10 is welded to the periphery thereof. A welding method can be appropriately selected according to the materials of the valve shaft 4, the valve disc 5, and the pin 10; examples thereof include arc welding (non-consumable electrode type or consumable electrode type), electron beam welding, laser welding, and the like. In the embodiment, micro-arc welding is used.

Before welding, pressure is applied to the valve shaft 4 from both the side of the tip portion of the shaft portion 12 of the pin 10 and the side of the head portion 11 of the pin 10 to deform the valve shaft 4. Specifically, as illustrated in FIGS. 2 to 4, the valve shaft 4 is relatively pressed from the side of the head portion 11 of the pin 10 toward the side of the tip portion of the shaft portion 12 of the pin 10 to be deformed. When the valve shaft 4 is deformed, the concave-side pressing positions 4a and 4b of the valve shaft 4 on the side of the tip portion of the shaft portion 12 of the pin 10 are two positions on both axial end portion sides of the valve shaft 4 facing the fluid passage 2. The convex-side pressing position 4c of the valve shaft 4 on the side of the head portion 11 of the pin 10 is an axially intermediate portion of the valve shaft 4 and is located between the concave-side pressing position 4a and the concave-side pressing position 4b.

The valve shaft 4 is deformed using a jig 100 for pressing the valve shaft 4. The jig 100 according to the present embodiment includes a concave-side pressing body 20 and a convex-side pressing body 30. The concave-side pressing body 20 abuts on the two concave-side pressing positions 4a and 4b located on both axial end sides of the valve shaft 4 and facing the inside of the fluid passage 2 to relatively press the valve shaft 4 from the side of the tip portion of the shaft portion 12 of the pin 10 toward the side of the head portion 11 of the pin 10. Further, the convex-side pressing body 30 is inserted into the fluid passage 2 of the valve housing 1, and abuts on the convex-side pressing position 4c located between the concave-side pressing positions 4a and 4b, which is an axially intermediate portion of the valve shaft 4, to relatively press the valve shaft 4 from the side of the head portion 11 of the pin 10 toward the side of the tip portion of the shaft portion 12 of the pin 10. The convex-side pressing position 4c of the valve shaft 4 by the convex-side pressing body 30 is preferably at an intermediate position of the valve shaft 4 facing the inside of the fluid passage 2.

Specifically, the concave-side pressing body 20 is formed in a substantially columnar shape that can be inserted into the fluid passage 2 of the valve housing 1, and includes: concave-side abutting portions 21a and 21b that are formed at both side edge portions of one end of the concave-side pressing body 20 and abut on the concave-side pressing positions 4a and 4b of the valve shaft 4; a recess 22 that is formed between the concave-side abutting portions 21a and 21b and allows deformation of the valve shaft 4 toward the side of the tip portion of the shaft portion 12 of the pin 10; and a working hole 23 formed therethrough so that a welding tool can pass therethrough.

The convex-side pressing body 30 is formed in a substantially columnar shape that can be inserted into the fluid passage 2 of the valve housing 1, and includes a convex-side abutting portion 31 that is formed at the center of one end thereof and abuts on the convex-side pressing position 4c of the valve shaft 4.

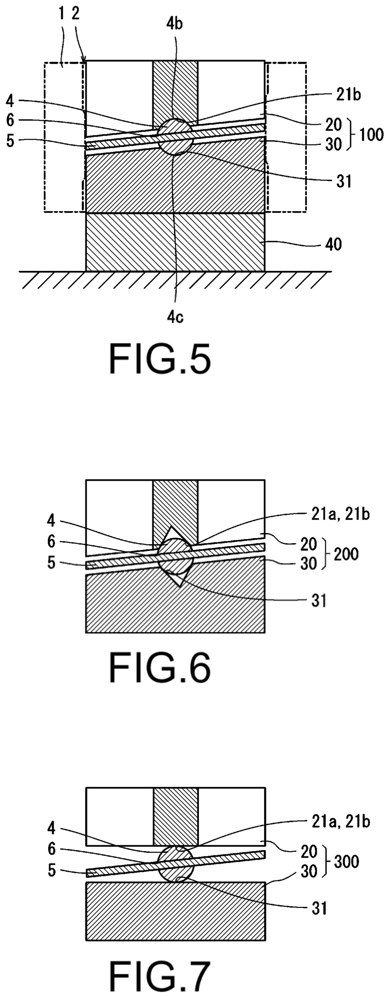

The concave-side abutting portion 21b (21a) of the concave-side pressing body 20 is recessed so as to conform to the outer peripheral shape of the valve shaft 4 when viewed in a cross-section orthogonal to the axis of the valve shaft 4, and is formed in an arc shape to make line contact or surface contact (see FIG. 5). Similarly, the convex-side abutting portion 31 of the convex-side pressing body 30 is recessed so as to conform to the outer peripheral shape of the valve shaft 4 when viewed in a cross-section orthogonal to the axis of the valve shaft 4, and is formed in an arc shape to make line contact or surface contact.

In the present embodiment, the convex-side pressing body 30 is fixed to a base 40 (see FIG. 5) placed on, for example, a workbench, a surface plate of a pressing machine, or the like. When the valve shaft 4 is deformed, the valve shaft 4 is pressed by the concave-side pressing body 20 to be deformed in a state where the valve shaft 4 abuts on the convex-side abutting portion 31 of the convex-side pressing body 30 and in a state where vertical movement of the valve housing 1 is free. When the valve shaft 4 is deformed, the valve housing 1 itself also moves. The device configuration can be simplified by deforming the valve shaft 4 solely by operating the jig 100 with, for example, a pressing machine while the vertical movement of the valve housing 1 is free. The base 40 is intended for height adjustment or the like during work and may be omitted.

The deformation of the valve shaft 4 may be plastic deformation or elastic deformation, and can be appropriately determined according to materials and dimensional properties of the valve shaft 4, the valve disc 5, and the pin 10, as well as the degree of deformation of the valve shaft 4 that would occur when welding is performed without applying pressure. In addition, the deformation amount of the valve shaft 4 during pressing (i.e., the pressing force applied to the valve shaft 4) can also be appropriately determined in accordance with these conditions. That is, as will be described later, the pressure is released after the welding is completed so that the valve shaft 4 becomes substantially straight when the temperature reaches room temperature.

Therefore, when welding is performed using the jig 100, as illustrated in FIGS. 2 to 4, the valve shaft 4 is pressed by the concave-side pressing body 20 in a state where the valve shaft 4 abuts on the convex-side abutting portion 31 of the convex-side pressing body 30 and in a state where vertical movement of the valve housing 1 is free. As a result, the valve shaft 4 is deformed while the valve housing 1 itself also moves. Specifically, the valve shaft 4 is curved and deformed such that the side of the tip portion of the shaft portion 12 of the pin 10 becomes convex and the side of the head portion 11 of the pin 10 becomes concave. In this state, the tip portion of the shaft portion 12 of the pin 10 is welded to the periphery thereof by micro-arc welding. That is, welding is performed in a state where the valve shaft 4 is deformed in a direction opposite to the direction of deformation that would occur in the valve shaft 4 due to the pin 10 after welding.

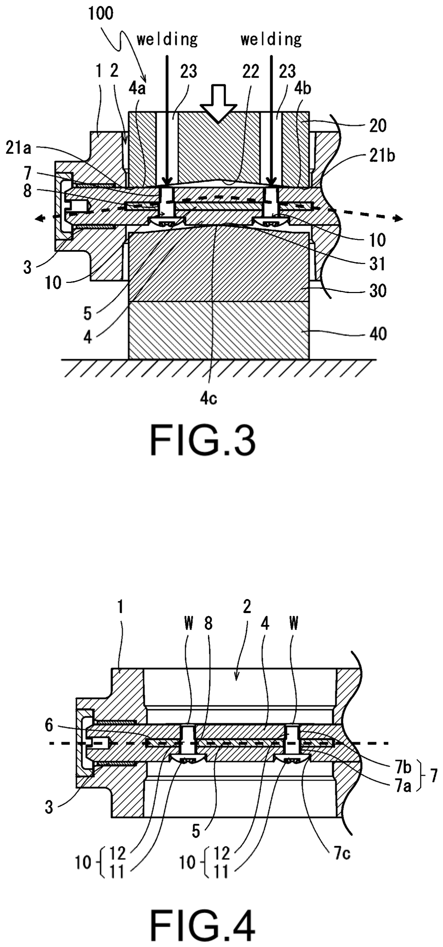

In this welding process, the welding is performed by inserting a welding tool through the working hole 23 of the concave-side pressing body 20. Therefore, the jig 100 enables the welding operation of the tip portion to be reliably performed while a load is applied to the valve shaft 4. As illustrated in FIG. 4, the welding is performed such that the welded portion W of the pin 10 is substantially flush with the outer surface of the valve shaft 4.

Furthermore, regarding the pressing of the valve shaft 4, if the valve shaft 4 were simply pressed from the side of the head portion 11 of the pin 10 toward the side of the tip portion of the shaft portion 12, unnecessary stress might be applied to the valve housing 1 and the bearing portion 3, or unintended deformation of the valve shaft 4 might occur. On the other hand, in the present embodiment, since both axial end sides of the valve shaft 4 facing the inside of the fluid passage 2 are pressed from the side of the tip portion of the shaft portion 12 of the pin 10 by the concave-side abutting portions 21a and 21b of the concave-side pressing body 20, it is possible to prevent unnecessary stress on the valve housing 1 and the bearing portion 3 and to avoid unintended deformation of the valve shaft 4.

Furthermore, during this pressing, since the convex-side abutting portion 31 of the convex-side pressing body 30 and the concave-side abutting portions 21a and 21b of the concave-side pressing body 20 are recessed in an arc shape so as to conform to the outer peripheral shape of the valve shaft 4, the pressing force can be reliably transmitted to the valve shaft 4, ensuring that the deformation of the valve shaft 4 is reliably performed. In addition, although the side of the head portion 11 of the pin 10 in the valve shaft 4 is bent so as to be convex and is thus curved and deformed, the recess 22 formed in the concave-side pressing body 20 accommodates this curved portion. This prevents the valve shaft 4 from interfering with the concave-side pressing body 20, thereby ensuring that the curved deformation can be reliably achieved.

### <Pressure Release Process>

As illustrated in FIG. 4, after the welding is completed, the pressure is released at an appropriate timing. In the present embodiment, since micro-arc welding is employed, which results in relatively low heat input to the entire component and allows for rapid cooling, it is preferable to release the pressure immediately after welding.

As a result, the material hardens and contracts as the welded portion W cools, causing the side of the welded portion W of the valve shaft 4 to contract. This would normally cause the valve shaft 4 to curve and deform such that the side of the tip portion of the shaft portion 12 of the pin 10 becomes concave and the side of the head portion 11 of the pin 10 becomes convex. However, since the valve shaft 4 was pre-deformed during welding by pressing it such that the side of the tip portion of the shaft portion 12 of the pin 10 becomes convex and the side of the head portion 11 of the pin 10 becomes concave, these deformations are canceled out. Consequently, the valve shaft 4 can maintain its straightness even after welding.

In the butterfly valve V manufactured in this manner, since the valve shaft 4 maintains its straightness even after welding during use, the rotation of the valve shaft 4 is not hindered, allowing the valve shaft 4 to rotate smoothly. Furthermore, since the welded portion W of the pin 10 is substantially flush with the outer surface of the valve shaft 4 when the tip portion of the shaft portion 12 is welded, there is virtually no protrusion from the valve shaft 4, and the effective area of the fluid passage is not reduced. Due to these effects, the flow rate of the butterfly valve V can be stably controlled, thereby improving the overall quality of the butterfly valve product.

The timing of releasing the pressure can be appropriately adjusted according to the type of welding, the sizes and materials of the valve shaft 4 and the valve disc 5, and the like. For example, when the type of welding is likely to distribute heat over a wider range, it is preferable to release the pressure after the welded portion W has completely cooled.

FIG. 6 illustrates a second example of the jig according to the embodiment. A jig 200 is configured in substantially the same manner as the jig 100, but is different in that the concave-side abutting portions 21a and 21b of the concave-side pressing body 20 and the convex-side abutting portion 31 of the convex-side pressing body 30 are each formed in a V-shape so as to provide two-point contact with the outer periphery of the valve shaft 4, when viewed in a cross section perpendicular to the axis of the valve shaft 4. The functions and effects of the jig 200 are the same as those of the jig 100.

FIG. 7 illustrates a third example of the jig according to the embodiment. A jig 300 is configured in substantially the same manner as the jig 100, but is different in that the concave-side abutting portions 21a and 21b of the concave-side pressing body 20 and the convex-side abutting portion 31 of the convex-side pressing body 30 are each formed in a flat shape that makes point contact with the outer periphery of the valve shaft 4. Even with the jig 300 having the concave-side abutting portions 21a and 21b and the convex-side abutting portion 31 in such a flat shape, the same functions and effects as those of the jig 100 can be achieved.

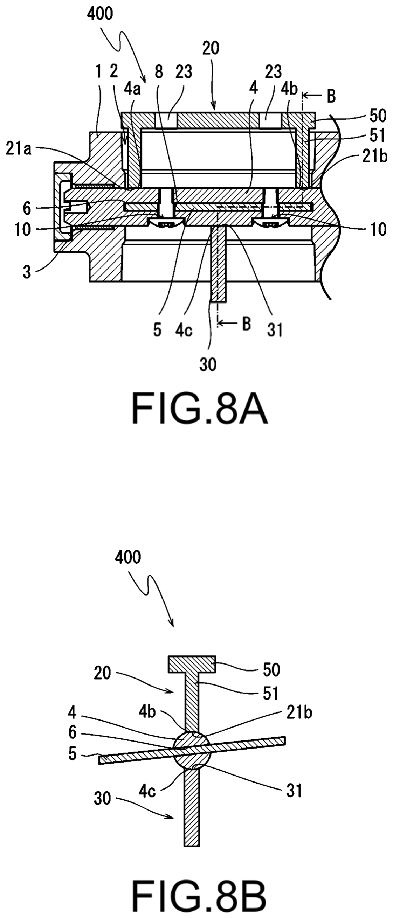

FIG. 8 illustrates a fourth example of the jig according to the embodiment. A jig 400 has a different shape from the jig 100 (which is formed in a columnar shape). The concave-side pressing body 20 of the jig 400 includes a plate-shaped base portion 50 extending in the axial direction of the valve shaft 4 and having the same working hole 23 as described above, and a pair of rod-shaped protruding bodies 51 protruding from both end portions of the base portion 50 and each having a concave-side abutting portion 21a (21b) at the tip thereof. Further, the convex-side pressing body 30 is formed in a rod shape having a convex-side abutting portion 31 at its tip. The concave-side abutting portions 21a and 21b and the convex-side abutting portion 31 are each formed in an arc shape to make line contact or surface contact with the outer periphery of the valve shaft 4, when viewed in a cross section perpendicular to the axis of the valve shaft 4. The functions and effects are the same as those of the jig 100.

In the jig 400, one of the concave-side abutting portions 21a and 21b of the concave-side pressing body 20 and the convex-side abutting portion 31 of the convex-side pressing body 30 may be formed in an arc shape to make line contact or surface contact with the outer periphery of the valve shaft 4, while the other may be formed in a V-shape to provide two-point contact with the outer periphery of the valve shaft 4, and these may be modified as appropriate.

In the above embodiment, the convex-side pressing body 30 is fixed and the concave-side pressing body 20 is moved toward the convex-side pressing body 30; however, the present invention is not necessarily limited thereto. The concave-side pressing body 20 may be fixed, and the convex-side pressing body 30 may be moved toward the concave-side pressing body 20. Alternatively, both the concave-side pressing body 20 and the convex-side pressing body 30 may be moved in directions toward each other, and these configurations may be modified as appropriate.

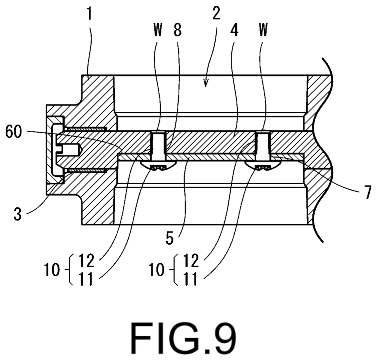

In the above embodiment, an example in which a screw is used as the pin 10 of the butterfly valve V has been described; however, the present invention is not necessarily limited thereto. For example, a rivet pin having no male thread formed on the shaft portion 12 may be used, and the type of pin may be modified as appropriate. Furthermore, while the above embodiment describes an example in which two pairs of the valve-shaft-side through-hole 7 and the valve-disc-side through-hole 8 are provided, the present invention is not necessarily limited thereto. For example, the present invention can also be applied to a configuration in which another pair is provided at the axial central portion of the valve shaft 4 facing the inside of the fluid passage 2, for a total of three pairs, or a configuration in which four or more pairs are provided. Furthermore, in the above-described embodiment, an example in which the butterfly valve V is applied to a type in which the valve disc 5 is inserted through the slit 6 formed in the valve shaft 4 has been described, but the present invention is not necessarily limited thereto. For example, as illustrated in FIG. 9, the present invention can also be applied to a type in which the valve disc 5 is fitted into a recess portion 60 formed on one side of the valve shaft 4 (perpendicular to its axis) and fixed by the pin 10, and such configurations may be modified as appropriate.

In the above embodiment, the butterfly valve V used in a throttle device of an internal combustion engine (engine) has been described; however, the present invention is not necessarily limited thereto. For example, it goes without saying that the present invention can be applied to various other butterfly valves, such as other types of throttle valves, power valves, swirl control valves, and tumble control valves. In short, those skilled in the art can easily make many modifications to these exemplary embodiments without substantially departing from the novel teachings and effects of the present invention, and these many modifications fall within the scope of the present invention.

### Reference Signs List

- V: Butterfly valve
- 1: Valve housing
- 2: Fluid passage
- 3: Bearing portion
- 4: Valve shaft
- 4a: Concave-side pressing position
- 4b: Concave-side pressing position
- 4c: Convex-side pressing position
- 5: Valve disc
- 6: Slit
- 7: Valve-shaft-side through-hole
- 7a: First hole
- 7b: Second hole
- 7c: Recess portion
- 8: Valve-disc-side through-hole
- 10: Pin
- 11: Head portion
- 12: Shaft portion
- 20: Concave-side pressing body
- 21a: Concave-side abutting portion
- 21b: Concave-side abutting portion
- 22: Recess
- 23: Working hole
- 30: Convex-side pressing body
- 31: Convex-side abutting portion
- 40: Base
- 50: Base portion
- 51: Protruding bodies
- 60: Recess portion
- 100: Jig
- 200: Jig
- 300: Jig
- 400: Jig

## Claims

1. A method for manufacturing a butterfly valve (V) including a valve housing (1) having a fluid passage (2) therein, a valve shaft (4) rotatably provided in the valve housing (1) across the fluid passage (2), and a valve disc (5) fixed to the valve shaft (4) in the fluid passage (2), wherein:
a pin (10) having a head portion (11) and a shaft portion (12) is used; a valve-shaft-side through-hole (7) having an axis in a direction perpendicular to an axial direction of the valve shaft (4) and through which the shaft portion (12) of the pin (10) is inserted is formed in the valve shaft (4); and a valve-disc-side through-hole (8) corresponding to the valve-shaft-side through-hole (7) and through which the shaft portion (12) of the pin (10) is inserted is formed in the valve disc (5); and
the valve disc (5) is attached to the valve shaft (4) by allowing the valve-shaft-side through-hole (7) and the valve-disc-side through-hole (8) to communicate with each other; then, the pin (10) is inserted into the valve-shaft-side through-hole (7) and the valve-disc-side through-hole (8) from a side of the shaft portion (12) thereof; and thereafter, when a tip portion of the shaft portion (12) of the pin (10) is welded to a periphery, the valve shaft (4) is relatively pressed from a side of the head portion (11) of the pin (10) toward a side of the tip portion of the shaft portion (12) of the pin (10) to deform the valve shaft (4), and pressing of the valve shaft (4) is released after completion of the welding.

2. The method for manufacturing a butterfly valve (V) according to claim 1, wherein:
the deformation of the valve shaft (4) is performed by applying pressure to the valve shaft (4) from both a side of the tip portion of the shaft portion (12) of the pin (10) and a side of the head portion (11) of the pin (10);
concave-side pressing positions (4a, 4b) of the valve shaft (4) on the side of the tip portion of the shaft portion (12) of the pin (10) are two positions on both axial end portion sides of the valve shaft (4) and facing the inside of the fluid passage (2); and
a convex-side pressing position (4c) of the valve shaft (4) on the side of the head portion (11) of the pin (10) is an axially intermediate portion of the valve shaft (4) and is between the concave-side pressing positions (4a, 4b).

3. The method for manufacturing a butterfly valve (V) according to any one of claims 1 to 2, wherein:
the deformation of the valve shaft (4) is performed using a jig (100); and
the jig (100) includes:
a concave-side pressing body (20) configured to be inserted into the fluid passage (2) of the valve housing (1), to abut on the concave-side pressing positions (4a, 4b) at two positions facing the inside of the fluid passage (2) on both axial end portion sides of the valve shaft (4), and to relatively press the valve shaft (4) from a side of the tip portion of the shaft portion (12) of the pin (10) toward a side of the head portion (11) of the pin (10); and
a convex-side pressing body (30) configured to be inserted into the fluid passage (2) of the valve housing (1) at an axially intermediate portion of the valve shaft (4), to abut on the convex-side pressing position (4c) between the concave-side pressing positions (4a, 4b), and to relatively press the valve shaft (4) from the side of the head portion (11) of the pin (10) toward the side of the tip portion of the shaft portion (12) of the pin (10).

4. The method for manufacturing a butterfly valve (V) according to any one of claims 1 to 3, wherein:
the concave-side pressing body (20) is formed in a columnar shape that can be inserted into the fluid passage (2) of the valve housing (1), and includes: concave-side abutting portions (21a, 21b) that are formed at both side edge portions of one end of the concave-side pressing body (20) and abut on the concave-side pressing positions (4a, 4b) of the valve shaft (4); a recess (22) that is formed between the concave-side abutting portions (21a, 21b) and allows for deformation of the valve shaft (4) toward the side of the tip portion of the shaft portion (12) of the pin (10); and a working hole (23) formed therethrough such that a welding tool can pass; and
the convex-side pressing body (30) is formed in a columnar shape that can be inserted into the fluid passage (2) of the valve housing (1), and includes a convex-side abutting portion (31) that is formed at a center of one end of the convex-side pressing body (30) and abuts on the convex-side pressing position (4c) of the valve shaft (4).

5. The method for manufacturing a butterfly valve (V) according to any one of claims 1 to 4, wherein:
the concave-side abutting portion (21a, 21b) of the concave-side pressing body (20) is formed in an arc shape following an outer peripheral shape of the valve shaft (4), or in a V-shape providing two-point contact with an outer periphery of the valve shaft (4); and
the convex-side abutting portion (31) of the convex-side pressing body (30) is formed in an arc shape following the outer peripheral shape of the valve shaft (4), or in a V-shape providing two-point contact with the outer periphery of the valve shaft (4).

6. A jig (100) used in the method for manufacturing a butterfly valve (V) according to any one of claims 1 to 5, the jig (100) comprising:
a concave-side pressing body (20) configured to relatively press the valve shaft (4) from the side of the tip portion of the shaft portion (12) of the pin (10) toward the head portion (11) of the pin (10); and
a convex-side pressing body (30) configured to relatively press the valve shaft (4) from the side of the head portion (11) of the pin (10) toward the side of the tip portion of the shaft portion (12) of the pin (10).
